# EUROPÄISCHE PATENTSCHRIFT

(11) **EP 4 101 709 B1**
(45) Veröffentlichungstag und Bekanntmachung des Hinweises auf die Patenterteilung: **24.01.2024**
(21) Anmeldenummer: 22172523.7
(22) Anmeldetag: 10.05.2022
(51) Int. Cl.: B60T 7/20, B60T 8/17, B60W 10/04, B60W 10/184

(54) **VERFAHREN, VORRICHTUNG UND COMPUTERPROGRAMMPRODUKT ZUM VERSPANNTEN BEWEGEN EINES FAHRZEUGS**
METHOD, DEVICE AND COMPUTER PROGRAM FOR BRACED MOVEMENT OF A VEHICLE
PROCÉDÉ, DISPOSITIF ET PRODUIT PROGRAMME INFORMATIQUE PERMETTANT DE DÉPLACER DE MANIÈRE CONTRAINTE UN VÉHICULE

(30) Priorität: 11.06.2021 DE 102021205969
(43) Veröffentlichungstag der Anmeldung: 14.12.2022
(73) Patentinhaber: VOLKSWAGEN AG, 38440 Wolfsburg (DE)
(72) Erfinder: Busse, Oliver, 38442 Wolfsburg (DE); Zink, Christian, 38446 Wolfsburg (DE)

(56) Entgegenhaltungen:
- DE-A1-102006 000 367
- DE-A1-102017 204 636

## Beschreibung

Die vorliegende Erfindung betrifft ein Verfahren und eine Vorrichtung zum zielgenauen Manövrieren eines Fahrzeugs bei niedrigen Geschwindigkeiten auf kleinem Raum. Die Erfindung betrifft ferner ein Computerprogrammprodukt zum Durchführen eines solchen Verfahrens sowie ein Speichermittel, auf dem ein solches Computerprogrammprodukt gespeichert ist.

Fahrzeuge müssen in verschiedenen Situationen besonders langsam und zielgenau manövriert werden. Dies trifft beispielsweise auf Rangiervorgänge beim Einparken, beim Überfahren eines Randsteins sowie beim Ankoppeln des Fahrzeugs an die Deichsel eines Anhängers zu. Um das langsame und zielgenaue Bewegen des Fahrzeugs fehlerfrei zu ermöglichen, sind fahrtechnisches Geschick und/oder unterstützende Elektronik erforderlich. Darüber hinaus ist es wünschenswert, wenn das Fahrmanöver mit möglichst hohem Fahrkomfort realisiert werden kann. Bekannte Fahrassistenzsysteme können beispielsweise der CN 107237848 B sowie der FR 2856449 A1 entnommen werden.

Bei den bekannten Systemen wird für gewöhnlich versucht, die Beschleunigung des Fahrzeugs durch ein entsprechendes Antriebsmoment und das Bremsen bzw. eine Verzögerung des Fahrzeugs durch ein Bremsmoment zu regeln. Die bekannten Lösungen sind allerdings stets mit einer gewissen Latenz behaftet. Gattungsgemäße Bremsen als Aktor für die Verzögerung sind relativ unpräzise und stark latenzbehaftet, da hierbei physikalisch Volumen verschoben werden muss, bevor die gewünschte Bremswirkung zum Tragen kommt. Weiterhin unterliegt die Bremswirkung einem gewissen Fading, welches verschiedenen Umweltfaktoren wie der Umgebungstemperatur unterliegt, sodass die Regelbarkeit zusätzlich erschwert wird.

Weitere Verfahren und Systeme zum verspannten Bewegen eines Fahrzeugs können der DE 10 2017 204 636 A1 sowie der DE 10 2006 000 367 A1 entnommen werden.

Aufgabe der vorliegenden Erfindung ist es, der voranstehend beschriebenen Problematik zumindest teilweise Rechnung zu tragen. Insbesondere ist es Aufgabe der vorliegenden Erfindung, ein Verfahren und eine Vorrichtung zum möglichst genauen Bewegen eines Fahrzeugs auf kleinem Raum zur Verfügung zu stellen.

Die voranstehende Aufgabe wird durch die Patentansprüche gelöst. Insbesondere wird die voranstehende Aufgabe durch das Verfahren gemäß Anspruch 1, die Vorrichtung gemäß Anspruch 10, das Computerprogrammprodukt gemäß Anspruch 11 sowie das Speichermittel gemäß Anspruch 12 gelöst. Weitere Vorteile der Erfindung ergeben sich aus den Unteransprüchen, der Beschreibung und den Figuren. Dabei gelten Merkmale, die im Zusammenhang mit dem Verfahren beschrieben sind, selbstverständlich auch im Zusammenhang mit der erfindungsgemäßen Vorrichtung, dem erfindungsgemäßen Computerprogrammprodukt, dem erfindungsgemäßen Speichermittel und jeweils umgekehrt, sodass bezüglich der Offenbarung zu den einzelnen Erfindungsaspekten stets wechselseitig Bezug genommen wird und/oder werden kann.

Gemäß einem ersten Aspekt der vorliegenden Erfindung wird ein Verfahren zum verspannten Bewegen eines Fahrzeugs mit einer Antriebseinheit zum Beschleunigen des Fahrzeugs und einer Bremseinheit zum Bremsen des Fahrzeugs zur Verfügung gestellt. Das Verfahren weist die folgenden Schritte auf:
- Erzeugen eines Verspann-Antriebsmomentes durch die Antriebseinheit,
- Erzeugen eines Bremsmomentes durch die Bremseinheit zum Kompensieren des Verspann-Antriebsmomentes und dadurch zum Erzeugen eines Verspannmomentes im Fahrzeug, und
- Bremsen des Fahrzeugs durch Verringern eines Antriebsmomentes.

Für einen Abbau bzw. zum Verringern des Verspannmomentes wird das Bremsmoment mit einem kleineren Moment-Abbaugradienten als das Verspann-Antriebsmoment abgebaut. Damit kann erreicht werden, dass stets ausreichend Bremsmoment vorhanden ist, um ein unbeabsichtigtes Beschleunigen des Fahrzeugs zuverlässig zu verhindern. Außerdem kann damit ein zuverlässiger Stillstand des Fahrzeugs gewährleistet werden. Zusätzlich ist es bei einem erfindungsgemäßen Verfahren möglich, dass, zum Erzeugen des Verspannmomentes, das Erzeugen des Bremsmomentes zeitlich vor dem Erzeugen des Verspann-Antriebsmomentes gestartet wird. Mit anderen Worten, das Antriebsmoment kann zeitlich verzögert zum Bremsmoment aufgebaut werden. Auch hier kann eine Gradientenbegrenzung des Bremsmomentes durchgeführt werden, um ein unerwünschtes Beschleunigen des Fahrzeuges zu vermeiden. Für einen Abbau des Verspannmomentes ist es ferner möglich, dass ein Abbau des Bremsmomentes zeitlich nach einem Abbau des Verspann-Antriebsmomentes gestartet wird. Damit können die bereits genannten Vorteile auf analoge Weise erzielt werden.

Mit der definierten Verspannung bzw. eines entsprechenden Verspannmomentes zwischen Antriebsmoment und Bremsmoment kann ein zielgenaues und präzises Einregeln der Beschleunigung und der sich daraus ableitenden Geschwindigkeit und Wegstrecke des Fahrzeugs erzielt werden. Latenzverluste durch ein Aufbauen des Druckes in der Bremseinheit werden vermieden. Durch die geringe Latenz während des Bremsvorgangs kann ferner ein hohes Maß an Fahrkomfort und Fahrsicherheit erreicht werden.

Das erfindungsgemäße Verfahren wird insbesondere zum Rangieren und/oder Einparken, vorzugsweise zum elektronisch assistierten Rangieren und/oder Einparken des Fahrzeugs durchgeführt. Bei diesen Fahrmanövern ist ein schnelles und punktgenaues Anhalten von elementarer Bedeutung. Bei assistierten Rangier- und/oder Einparkvorgängen werden an die Genauigkeit der Bremsaktorik heutzutage besondere hohe Ansprüche gestellt. Mit dem vorgeschlagenen Verfahren kann das Einhalten des von beispielsweise einer Parkfunktion gewünschten maximalen Anhaltewegs sichergestellt werden.

Unter dem verspannten Bewegen des Fahrzeugs kann ein Bewegen des Fahrzeugs verstanden werden, bei welcher gleichzeitig das Verspann-Antriebsmoment und das Bremsmoment mit gleicher Größe, nur unterschiedlichen Vorzeichen, auf die zugehörigen Bauteile im Fahrzeug appliziert werden, während das Fahrzeug mit einem zusätzlichen Antriebsmoment bewegt wird. Gleichwohl kann das Bremsmoment als positives Bremsmoment verstanden werden. Das Kompensieren des Verspann-Antriebsmomentes kann dahingehend verstanden werden, dass das Bremsmoment wenigstens so stark erzeugt wird, dass es das Verspann-Antriebsmoment ausgleicht. Das Bremsmoment weist also, mit anderem Vorzeichen, wenigstens die Höhe des Verspann-Antriebsmomentes auf. Das Antriebsmoment, das zum Bremsen des Fahrzeugs verringert wird, kann das Verspann-Antriebsmoment oder ein zusätzliches Antriebsmoment, das als Beschleunigungs-Antriebsmoment bezeichnet werden kann, verstanden werden. Anstelle des Erzeugens eines Beschleunigungs-Antriebsmomentes kann auch das Verspann-Antriebsmoment über den Wert, der für das gewünschte Verspannmoment erzeugt wird, hinaus verstärkt werden. Das Verspann-Antriebsmoment und das Beschleunigungs-Antriebsmoment werden beide von der Antriebseinheit erzeugt und vorliegend insbesondere zur besseren Abgrenzung der unterschiedlichen Momentwerte unterschiedlich bezeichnet. Unter dem Bremsmoment kann auch ein Verspann-Bremsmoment verstanden werden. Folglich ist das Bremsmoment nicht dahingehend beschränkt zu verstehen, dass durch das Bremsmoment das Fahrzeug in den Stillstand gebracht wird. Vielmehr soll das erfindungsgemäße Bremsmoment zum Erzeugen des Verspannmomentes genutzt werden.

Unter dem Bremsen des Fahrzeugs kann ein Abbremsen und/oder Entschleunigen des Fahrzeugs, möglicherweise bis hin zum Stillstand des Fahrzeugs, verstanden werden. Das heißt, das Bremsen ist nicht auf einen reinen Bremsvorgang beschränkt zu betrachten, bei welchem ausschließlich ein Bremsmoment wirkt. Im Rahmen der vorliegenden Erfindung ist es entscheidend, dass während des Bremsens bzw. Entschleunigen des Fahrzeugs möglichst stets das Bremsmoment und das Verspann-Antriebsmoment, also das Verspannmoment, wirken. Die Bremseinheit umfasst insbesondere die Bremse, insbesondere in Form einer Reibbremse, des Fahrzeugs.

Analog zum verspannten Bewegen des Fahrzeugs kann man sich vorstellen, ein Fahrer des Fahrzeugs würde mit dem einen Fuß auf der Bremse stehen und mit dem anderen Fuß das dadurch aufgeprägte Bremsmoment über das Fahr- bzw. Gaspedal ausgleichen, sodass eine resultierende Beschleunigung als auch die Geschwindigkeit des Fahrzeugs unverändert bleiben. Wenn das Fahrzeug also Geschwindigkeit aufnimmt, kann das Bremsmoment aufgeprägt und parallel dazu das Antriebsmoment um den gleichen "negativen" Betrag erhöht werden. Wenn nun beispielsweise eine Kundenfunktion im Rahmen eines Einparkassistenten oder eines Ankoppelassistenten zum Ankoppeln des Fahrzeugs an eine Deichsel eines Anhängers eine negative Sollbeschleunigung anfordert, kann allein durch die Wegnahme des Antriebsmomentes das Fahrzeug schnell, präzise und ohne Latenzverluste bis in den Stillstand verzögert werden.

Das Bremsmoment wird vorzugsweise so lange angefordert bzw. erzeugt, solange das Fahrzeug in Bewegung ist und/oder bis das Fahrzeug wieder im Stillstand ist. Das Bremsmoment kann auf ein bereits vorhandenes Antriebsmoment und/oder Beschleunigungs-Antriebsmoment aufaddiert und bei einer Regelung als konstanter Offset auf einem Antriebspfad mitgeführt werden. Hierdurch kann der Antriebsstrang des Fahrzeugs definiert gegen die Bremseinheit gefahren werden. Dieses, auf den ersten Blick widersprüchliche Vorgehen resultiert in dem entscheidenden Vorteil, dass durch die Wegnahme des Antriebsmomentes das Fahrzeug, wie vorstehend beschrieben, besonders schnell und ohne Latenz abgebremst werden kann. Weiterhin ergibt sich der Vorteil, dass ein höherer Wirkungsgrad der Bremse hinsichtlich des erreichbaren Druckgradienten erzielt wird und eine höhere Stellgenauigkeit des Antriebs durch Verlagerung in einen besser regelbaren Betriebspunkt außerhalb einer Kleinstlast ermöglicht wird.

Um den Rangier- und/oder Parkvorgang zu beenden, wird das Fahrzeug zunächst über eine negative Solbeschleunigung bzw. das Bremsen in den Stillstand gebracht. Sobald sich das Fahrzeug im Stillstand befindet, kann die Verspannung abgebaut bzw. das Verspannmoment gelöst werden. Das Bremsmoment wird vorzugsweise stets größer als das Verspann-Antriebsmoment eingestellt. Damit kann gewährleistet werden, dass das Fahrzeug auch nach Abschluss des Bremsens und/oder im Stillstand zuverlässig in der gewünschten Position gehalten werden kann. Außerdem kann damit stets eine unbeabsichtigte Beschleunigung des Fahrzeugs verhindert werden.

Das Verspann-Antriebsmoment und das Bremsmoment können gleichzeitig oder nacheinander erzeugt werden. Das heißt, Kompensieren des Verspann-Antriebsmomentes durch das Bremsmoment kann auch als Kompensieren des Bremsmomentes durch das Verspann-Antriebsmoment verstanden werden. Vorzugsweise wird zunächst das Bremsmoment erzeugt und anschließend oder annähernd gleichzeitig, vorzugsweise noch während des Erzeugens des Bremsmomentes, das Verspann-Antriebsmoment. Das Bremsmoment und das Verspann-Antriebsmoment können während eines Beschleunigungsvorgangs zum Beschleunigen des Fahrzeugs zum Erzeugen des Verspannmomentes gleichzeitig aufgebaut werden.

Gemäß einer weiteren Ausführungsform ist es möglich, dass bei einem Verfahren das Fahrzeug durch ein Beschleunigungs-Antriebsmoment beschleunigt wird und anschließend das Verspannmoment erzeugt wird. So können zunächst die Wunschbeschleunigung und/oder die Wunschgeschwindigkeit eingestellt und anschließend das gewünschte Verspannmoment aufgeprägt werden. Diese Vorgehensweise bietet den Vorteil, dass ohne Anhalten des Fahrzeugs direkt in den verspannten Betrieb und das anschließende Regelverfahren zum Bremsen des Fahrzeugs übergegangen werden kann. In der Praxis kann zunächst eine Kundenfunktion wie ein intelligenter Parkassistent oder ein Anhänger Ankoppelassistent aktiviert werden. Sobald die Funktion eine positive Sollbeschleunigung vorgibt und das Fahrzeug Geschwindigkeit aufnimmt bzw. aufgenommen hat, kann das Verspannmoment erzeugt werden.

Weiterhin ist es möglich, dass bei einem Verfahren das Verspannmoment im Stillstand des Fahrzeugs erzeugt wird und anschließend ein Beschleunigungs-Antriebsmoment zum Beschleunigen des Fahrzeugs erzeugt wird. Damit kann insbesondere ein unbeabsichtigtes Beschleunigen und/oder ein unbeabsichtigtes Bremsen des Fahrzeugs während des Fahrmanövers verhindert werden. Während des Erzeugens des Verspannmomentes kann es zu einer kurzzeitigen Überhöhung des Bremsmomentes oder des Verspann-Antriebsmomentes kommen, woraus ein entsprechender Brems- oder Beschleunigungsvorgang resultieren kann. Dies kann verhindert oder zumindest reduziert werden, indem das Verspannmoment zunächst im Stillstand des Fahrzeugs, insbesondere mit einem vordefiniert überhöhten Bremsmoment, also einem Bremsmoment das zumindest während des Stillstands stets leicht größer als das Verspann-Antriebsmoment ist, aufgebaut wird.

Bei einem Verfahren ist es zudem möglich, dass das Bremsmoment abhängig von einem variierend eingestellten Verspann-Antriebsmoment und/oder abhängig von einem variierend eingestellten Beschleunigungs-Antriebsmoment verändert wird. Das heißt, abhängig davon, wie sich das Verspann-Antriebsmoment und/oder das Beschleunigungs-Antriebsmoment ändern oder geändert werden, kann auch das Bremsmoment geändert und/oder geregelt werden. Das Bremsmoment und das daraus resultierende Verspannmoment können steigungsabhängig bzw. abhängig von einer Steigung, an welcher das Fahrzeug steht oder sich bewegt, berechnet werden. Damit kann ein zuverlässiges Verzögern bzw. Bremsen des Fahrzeugs bis in den Stillstand ausschließlich durch das Absenken eines Antriebsmomentes ermöglicht werden. Unter dem abhängigen Verändern und/oder Einstellen des Bremsmomentes kann verstanden werden, dass das Bremsmoment abhängig vom variierend eingestellten und/oder sich verändernden Verspann-Antriebsmoment und/oder abhängig vom variierend eingestellten und/oder sich verändernden Beschleunigungs-Antriebsmoment dynamisch geregelt wird. Außerdem können das Verspann-Antriebsmoment und/oder das Beschleunigungs-Antriebsmoment abhängig vom eingestellten und/oder sich verändernden Bremsmoment dynamisch verändert bzw. geregelt werden. Die verschiedenen Momente können damit insbesondere kontinuierlich an die jeweilige Fahrsituation angepasst werden, wenn der Untergrund beispielsweise unterschiedliche Steigungen annimmt, gebremst oder beschleunigt werden soll. Für den Fall, dass das eingestellte Verspannmoment nicht ausreichend ist, kann an der Bremseinheit beispielsweise ein zusätzliches Bremsmoment angefordert werden.

Von weiterem Vorteil kann es sein, wenn das Verspannmoment bei einem Verfahren im Stillstand des Fahrzeugs abgebaut wird. Damit können unbeabsichtigte Beschleunigungsund/oder Bremsvorgänge während der Fahrt des Fahrzeugs zumindest weitestgehend verhindert werden. Insbesondere kann das jeweilige Fahrmanöver dadurch mit einem hohen Fahrkomfort und einer hohen Fahrsicherheit durchgeführt werden. Hierbei kann es weiterhin von Vorteil sein, wenn die Geschwindigkeit des Fahrzeugs während des verspannten Bewegens auf einen Wert kleiner 2 km/h, insbesondere kleiner 1 km/h, begrenzt wird. Damit kann insbesondere auf ein Ändern des eingestellten Verspannmomentes während der Fahrt verzichtet werden.

Gemäß einer weiteren Ausführungsform ist es möglich, dass das Fahrzeug bei einem Verfahren mittels Beschleunigungs-Antriebsmoment für ein Fahrmanöver zum Positionieren des Fahrzeugs, insbesondere für einen Rangier- und/oder Parkvorgang, in einer vordefinierten Halteposition auf eine Geschwindigkeit kleiner 10 km/h, insbesondere kleiner 5 km/h, beschleunigt wird. Damit kann gewährleistet werden, dass das Verspannmoment ausreichend klein wird oder ist, um beispielsweise Schäden am Fahrzeug zu verhindern und/oder ein unkontrolliertes Bewegen des Fahrzeugs zu vermeiden. Soll das Fahrzeug beispielsweise über einen gesamten, mittels intelligentem Parkassistenten geführten Einparkvorgang verspannt bewegt werden, kann der verspannte Betrieb bzw. das verspannte Bewegen des Fahrzeugs auf höchstens 4 km/h begrenzt werden. Hierbei kann nach Aktivierung des Parkassistenten im Stand mit dem Anfahrvorgang ein Grundverspannmoment aufgebaut werden. Das Verspannmoment kann während des Beschleunigungsvorgangs kontinuierlich erhöht werden, bis das Grundverspannmoment erreicht worden ist. Dieser Vorgang kann, wie vorstehend bereits erwähnt, steigungsabhängig bis zu einem applikativ festgelegten Wert erhöht werden.

Außerdem ist es bei einem Verfahren möglich, dass, zum Erzeugen des Verspannmomentes, das Bremsmoment mit einem größeren Moment-Erzeugungsgradienten als das Verspann-Antriebsmoment erzeugt wird. Das heißt, das Bremsmoment wird schneller und/oder stärker als das Verspann-Antriebsmoment aufgebaut bzw. erzeugt. Damit kann insbesondere ein unbeabsichtigtes Beschleunigen des Fahrzeugs verhindert werden. Ferner lassen sich dadurch Unfälle vermeiden, die beispielsweise durch einen zu späten Bremsvorgang und/oder einen zu starken Beschleunigungsvorgang passieren können. Einem möglichen, kurzzeitigen Stehenbleiben des Fahrzeuges kann durch eine Gradientenbegrenzung des Bremsmomentes Rechnung getragen werden, die ein kontinuierliches Hochrampen bzw. Vergrößern des Verspannungsmomentes zur Folge hat. Hierbei kann es ferner von Vorteil sein, wenn für das Antriebsmoment gegenüber dem Bremsmoment eine größere Gradientenbegrenzung eingestellt wird.

Gemäß einem weiteren Aspekt der vorliegenden Erfindung wird eine Vorrichtung zum verspannten Bewegen eines Fahrzeugs gemäß eines wie vorstehend beschriebenen Verfahrens zur Verfügung gestellt. Die Vorrichtung weist eine Antriebseinheit zum Beschleunigen des Fahrzeugs, eine Bremseinheit zum Bremsen des Fahrzeugs und eine Einstelleinheit zum Einstellen des Verspannmomentes mittels der Antriebseinheit und der Bremseinheit sowie zum Bremsen des Fahrzeugs mittels der Bremseinheit auf. Damit bringt die erfindungsgemäße Vorrichtung die gleichen Vorteile mit sich, wie sie ausführlich mit Bezug auf das erfindungsgemäße Verfahren beschrieben worden sind. Die Bremseinheit weist insbesondere eine für Fahrzeuge, insbesondere Straßenfahrzeuge wie einen PKW oder einen LKW übliche Reibbremse auf. Die Beschleunigungseinheit weist vorzugsweise einen gattungsgemäßen Antriebsstrang auf oder ist als Teil des Antriebsstrangs ausgestaltet. Die Einstelleinheit weist insbesondere ein gattungsgemäßes Fahrzeugsteuergerät auf oder ist als Teil eines solchen Fahrzeugsteuergerätes ausgestaltet.

Ferner wird ein Computerprogrammprodukt zur Verfügung gestellt, das Befehle umfasst, die bei der Ausführung des Computerprogrammprodukts durch einen Computer diesen veranlassen, mittels einer wie vorstehend beschriebenen Vorrichtung das im Detail beschriebene Verfahren auszuführen. Der Computer kann als das Fahrzeugsteuergerät betrachtet werden, einen Teil des Fahrzeugsteuergerätes umfassen oder zusätzlich zu dem Fahrzeugsteuergerät noch weitere Funktionsbauteil aufweisen. Das Computerprogrammprodukt kann als computerlesbarer Anweisungscode in jeder geeigneten Programmiersprache und/oder Maschinensprache wie beispielsweise in JAVA, C++, C# und/oder Python implementiert sein. Das Computerprogrammprodukt kann auf einem computerlesbaren Speichermedium wie einer Datendisk, einem Wechsellaufwerk, einem flüchtigen oder nichtflüchtigen Speicher, oder einem eingebauten Speicher/Prozessor abgespeichert sein. Der Anweisungscode kann einen Computer oder andere programmierbare Geräte wie das Fahrzeugsteuergerät derart programmieren, dass die gewünschten Funktionen ausgeführt werden. Ferner kann das Computerprogrammprodukt in einem Netzwerk wie beispielsweise dem Internet bereitgestellt werden und/oder sein, von dem es bei Bedarf von einem Nutzer heruntergeladen werden kann. Das Computerprogrammprodukt kann sowohl mittels einer Software, als auch mittels einer oder mehrerer spezieller elektronischer Schaltungen, das heißt in Hardware oder in beliebig hybrider Form, das heißt mittels Software-Komponenten und Hardware-Komponenten, realisiert werden und/oder sein.

Im Rahmen der vorliegenden Erfindung wird zudem ein computerlesbares Speichermittel vorgeschlagen, auf welchem ein wie vorstehend im Detail beschriebenes Computerprogrammprodukt gespeichert ist. Das Speichermittel ist insbesondere in Form eines nichtflüchtigen Speichermittels zur Verfügung gestellt. Damit bringen das erfindungsgemäße Speichermittel sowie auch das Computerprogrammprodukt die vorstehend beschriebenen Vorteile mit sich.

Es zeigen jeweils schematisch:
- Figur 1: eine Darstellung zum Erläutern eines Verfahrens gemäß einer ersten Ausführungsform der vorliegenden Erfindung,
- Figur 2: ein Flussdiagramm zum Erläutern des Verfahrens gemäß der ersten Ausführungsform,
- Figur 3: eine Darstellung zum Erläutern eines Verfahrens gemäß einer zweiten Ausführungsform der vorliegenden Erfindung, und
- Figur 4: ein Blockschaltbild zum Darstellen eines Speichermittels mit einem darauf gespeicherten Computerprogrammprodukt gemäß der vorliegenden Erfindung.

Elemente mit gleicher Funktion und Wirkungsweise sind in den Figuren jeweils mit den gleichen Bezugszeichen versehen.

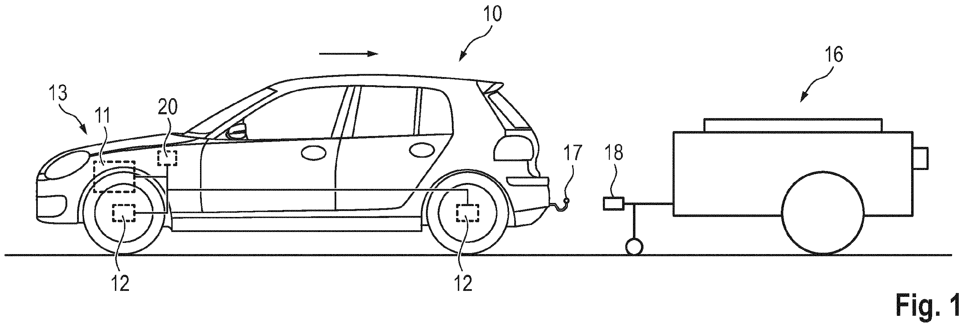

Fig. 1 zeigt ein Fahrzeug 10 mit einer Antriebseinheit 11 zum Beschleunigen des Fahrzeugs 10 und einer Bremseinheit 12 zum Bremsen des Fahrzeugs 10. Das Fahrzeug 10 ist in Form eines PKW ausgestaltet. Die Antriebseinheit 11 umfasst den Motor und weitere Antriebselemente des Fahrzeugs 10 und die Bremseinheit 12 umfasst die Reibbremse des Fahrzeugs 10. Das Fahrzeug 10 weist ferner ein Fahrzeugsteuergerät 20 mit einer Einstelleinheit zum Ansteuern der Antriebseinheit 11 und der Bremseinheit 12 auf. Außerdem weist das Fahrzeug 10 eine Anhängerkupplung 17 auf, an welcher eine Deichsel 18 bzw. ein Kupplungsabschnitt der Deichsel 18 eines Anhängers 16 befestigt werden kann.

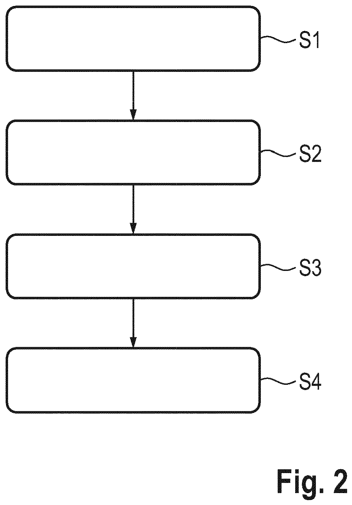

Mit Bezug auf Fig. 1 sowie Fig. 2 wird anschließend ein Verfahren zum verspannten Bewegen des Fahrzeugs 10 zum Ankoppeln der Anhängerkupplung 17 an die Deichsel 18 bzw. zum Ankoppeln des Fahrzeugs 10 an den Anhänger 16 beschrieben. In einem ersten Schritt S1 wird hierbei zunächst ein Bremsmoment durch die Bremseinheit 12 erzeugt. Außerdem wird in einem Schritt S2 ein Verspann-Antriebsmomentes durch die Antriebseinheit 11 erzeugt. Die Schritte S1 und S2 können auch in umgekehrter Reihenfolge, gleichzeitig, annähernd gleichzeitig oder zumindest teilweise gleichzeitig durchgeführt werden. Das Bremsmoment und das Antriebsmoment werden möglichst mit gleicher Größe und unterschiedlichen Vorzeichen erzeugt, sodass sie sich zum Erzeugen eines Verspannmomentes im Fahrzeug 10 sozusagen gegenseitig kompensieren bzw. ausgleichen. In einem dritten Schritt S3 wird nun ein Beschleunigungs-Antriebsmoment erzeugt, um das Fahrzeug 10 auf eine vordefinierte Rangiergeschwindigkeit, vorliegend ca. 2 km/h, zu beschleunigen. In einem vierten Schritt S4 wird das Fahrzeug 10 nun im Rahmen des Rangiervorgangs durch Verringern eines Antriebsmomentes, insbesondere des Beschleunigungs-Antriebsmomentes bzw. des Antriebsmomentes, das über das Antriebsmoment zum Erzeugen des gewünschten Verspannmomentes hinaus geht, gebremst. Der Bremsvorgang wird insbesondere dann durchgeführt, wenn sich die Anhängerkupplung 17 an der Deichsel 18 befindet und/oder sich der Deichsel 18 auf einen vordefinierbaren Abstand angenähert hat.

Das Bremsmoment kann abhängig von einem variierend eingestellten Verspann-Antriebsmoment und/oder abhängig von einem variierend eingestellten Beschleunigungs-Antriebsmoment verändert werden. Zum Erzeugen des Verspannmomentes gemäß den Schritten S1 und S2 wird das Bremsmoment mit einem größeren Moment-Erzeugungsgradienten als das Verspann-Antriebsmoment erzeugt. Außerdem wird das Erzeugen des Bremsmomentes zeitlich kurz vor dem Erzeugen des Verspann-Antriebsmoment gestartet. Für einen Abbau des Verspannmomentes wird das Bremsmoment mit einem kleineren Moment-Abbaugradienten als das Verspann-Antriebsmoment abgebaut. Außerdem wird der Abbau des Bremsmomentes zeitlich nach einem Abbau des Verspann-Antriebsmomentes gestartet. Die Einstelleinheit (nicht dargestellt) des Fahrzeugsteuergerätes 20 ist zum Durchführen eines solchen Verfahrens unter Verwendung der vorhandenen Fahrzeugkomponenten konfiguriert. Zum Durchführen des Verfahrens weist das in Fig. 1 gezeigte Fahrzeug eine Vorrichtung 13 auf, welche die Antriebseinheit 11, die Bremseinheit 12 sowie die Einstelleinheit umfasst.

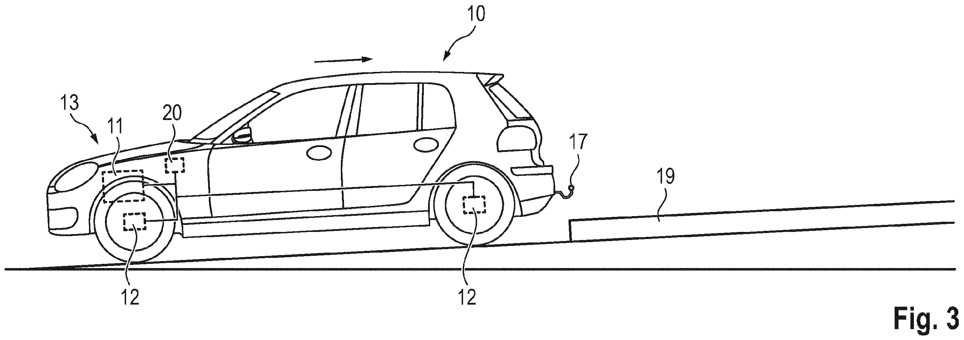

Mit Bezug auf Fig. 3 wird eine weitere Ausführungsform des Verfahrens beschrieben, bei welcher das Fahrzeug 10 auf einer schiefen Ebene über einen Rand- bzw. Bordstein fahren soll. Hierbei soll das Verspannmoment zunächst so gestellt werden, dass das Fahrzeug 10 entsprechend allein durch das in der Verspannung gestellte Bremsmoment gehalten werden kann und somit eine Rücknahme des Antriebsmomentes jederzeit zum Stillstand des Fahrzeugs 10 führt. Die maximale Fahrgeschwindigkeit wird in diesem Fall auf 4 km/h begrenzt. Hierbei wird eine mögliche Verzögerung von 0,5 m/s² betrachtet. Daraus ergibt sich eine Kraft von 1050 N, bei einer Fahrzeugmasse von 2100 kg. Daraus resultiert ein Verspannmoment von ca. 327 Nm. Dieser Wert soll nun applizierbar gehalten werden, um eine Anpassung auf ein anderes Fahrzeugprojekt vornehmen zu können. Wird nun angenommen, dass das Fahrzeug aus einer Fahrt mit 4 km/h bzw. 1,1 m/s kurz vor dem Randstein zum Stillstand kommen soll, muss mit einer Verzögerung von 0,5 m/s² gebremst werden. Dies benötigt eine Zeit von ca. 2,2 s. Abhängig von der Steigung, in der sich das Fahrzeug 10 bewegt, kann das Verspanmoment entsprechend angepasst werden, sodass ein Halten bei alleinigem Wegschalten des Antriebsmomentes gewährleistet ist. In vorliegendem Fall kann das zusätzlich in der Steigung benötigte Moment wie folgt berechnet werden. Zunächst wird die Hangabtriebskraft mit einem Wert von ca. 1580 N ermittelt. Um hieraus nun das gewünschte Verspannmoment zu ermitteln bzw. zu berechnen, kann diese Kraft mit dem Radius der Räder multipliziert werden und das Verspannmoment in der Ebene aufaddiert werden. Daraus ergibt sich ein Verspannmoment von ca. 818 Nm.

Das Gesamtmoment aus Verspann-Antriebsmoment und Beschleunigungs-Antriebsmoment soll jedoch ein Äquivalent von 2 m/s² nicht überschreiten. Fordert eine Kundenfunktion für den Parkassistenten eine maximale Beschleunigung von 0,5 m/s² an, wird die Verspannung bzw. das Verspannmoment auf ein Äquivalent von 1,5 m/s² begrenzt. Dies entspricht einem Verspannmoment von ca. 980 Nm. Hierdurch kann sichergestellt werden, dass, wenn im Fehlerfall das Bremsmoment nicht mehr gestellt werden kann, die sich ergebende Beschleunigung nicht zu einer unkontrollierten und/oder unkontrollierbaren Bewegung des Fahrzeugs 10 führt. Weiterhin kann eingestellt werden, dass bei Erkennen eines Fehlerfalls das Antriebsmoment möglichst zeitnah und/oder direkt weggeschaltet werden kann. Mit einem solchen Verfahren kann das Fahrzeug 10 auch auf einer schiefen Ebene sicher und zielgenau an den Randstein 19 und über diesen hinaus bewegt werden. Kräfte und Momente, die während der Überfahrt des Randsteins entstehen, können wie vorstehend zur schiefen Ebene im Detail beschrieben, auf analoge Weise berechnet und entsprechend geregelt werden.

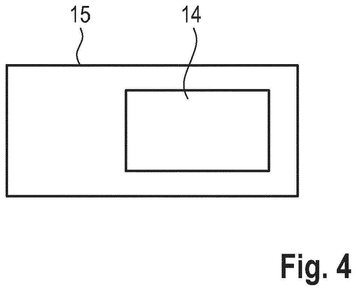

Fig. 4 zeigt ein computerlesbares, nichtflüchtiges Speichermittel 15 mit einem darauf gespeicherten Computerprogrammprodukt 14. Das Computerprogrammprodukt 14 umfasst Befehle, die bei der Ausführung des Computerprogrammprodukts 14 durch einen Computer wie das Fahrzeugsteuergerät 20 diesen veranlassen, in dem Fahrzeug 10 das vorstehend im Detail beschriebene Verfahren auszuführen.

Die Erfindung lässt neben den dargestellten Ausführungsformen weitere Gestaltungsgrundsätze zu. Das heißt, die Erfindung soll nicht auf die mit Bezug auf die Figuren erläuterten Ausführungsbeispiele beschränkt betrachtet werden.

### Bezugszeichenliste

- 10: Fahrzeug
- 11: Antriebseinheit
- 12: Bremseinheit
- 13: Vorrichtung
- 14: Computerprogrammprodukt
- 15: Speichermittel
- 16: Anhänger
- 17: Anhängerkupplung
- 18: Deichsel
- 19: Randstein
- 20: Fahrzeugsteuergerät

## Patentansprüche

1. Verfahren zum verspannten Bewegen eines Fahrzeugs (10) mit einer Antriebseinheit (11) zum Beschleunigen des Fahrzeugs (10) und einer Bremseinheit (12) zum Bremsen des Fahrzeugs (10), aufweisend die Schritte:
- Erzeugen eines Verspann-Antriebsmomentes durch die Antriebseinheit (11),
- Erzeugen eines Bremsmomentes durch die Bremseinheit (12) zum Kompensieren des Verspann-Antriebsmomentes und dadurch zum Erzeugen eines Verspannmomentes im Fahrzeug (10), und
- Bremsen des Fahrzeugs (10) durch Verringern eines Antriebsmomentes, **dadurch gekennzeichnet,**
**dass**, für einen Abbau des Verspannmomentes, das Bremsmoment mit einem kleineren Moment-Abbaugradienten als das Verspann-Antriebsmoment abgebaut wird.

2. Verfahren nach Anspruch 1,
**dadurch gekennzeichnet,**
**dass** das Fahrzeug (10) durch ein Beschleunigungs-Antriebsmoment beschleunigt wird und anschließend das Verspannmoment erzeugt wird.

3. Verfahren nach Anspruch 1,
**dadurch gekennzeichnet,**
**dass** das Verspannmoment im Stillstand des Fahrzeugs (10) erzeugt wird und anschließend ein Beschleunigungs-Antriebsmoment zum Beschleunigen des Fahrzeugs (10) erzeugt wird.

4. Verfahren nach einem der voranstehenden Ansprüche
**dadurch gekennzeichnet,**
**dass** das Bremsmoment abhängig von einem variierend eingestellten Verspann-Antriebsmoment und/oder abhängig von einem variierend eingestellten Beschleunigungs-Antriebsmoment verändert wird.

5. Verfahren nach einem der voranstehenden Ansprüche
**dadurch gekennzeichnet,**
**dass** das Verspannmoment im Stillstand des Fahrzeugs (10) abgebaut wird.

6. Verfahren nach einem der voranstehenden Ansprüche
**dadurch gekennzeichnet,**
**dass** das Fahrzeug (10) mittels Beschleunigungs-Antriebsmoment für ein Fahrmanöver zum Positionieren des Fahrzeugs (10) in einer vordefinierten Halteposition auf eine Geschwindigkeit kleiner 10 km/h beschleunigt wird.

7. Verfahren nach einem der voranstehenden Ansprüche
**dadurch gekennzeichnet,**
**dass**, zum Erzeugen des Verspannmomentes, das Bremsmoment mit einem größeren Moment-Erzeugungsgradienten als das Verspann-Antriebsmoment erzeugt wird.

8. Verfahren nach einem der voranstehenden Ansprüche
**dadurch gekennzeichnet,**
**dass**, zum Erzeugen des Verspannmomentes, das Erzeugen des Bremsmomentes zeitlich vor dem Erzeugen des Verspann-Antriebsmoment gestartet wird.

9. Verfahren nach einem der voranstehenden Ansprüche
**dadurch gekennzeichnet,**
**dass**, für einen Abbau des Verspannmomentes, ein Abbau des Bremsmomentes zeitlich nach einem Abbau des Verspann-Antriebsmomentes gestartet wird.

10. Vorrichtung (13) zum verspannten Bewegen eines Fahrzeugs (10) gemäß einem Verfahren nach einem der voranstehenden Ansprüche, aufweisend eine Antriebseinheit (11) zum Beschleunigen des Fahrzeugs (10), eine Bremseinheit (12) zum Bremsen des Fahrzeugs (10) und eine Einstelleinheit zum Einstellen des Verspannmomentes mittels der Antriebseinheit (11) und der Bremseinheit (12) sowie zum Bremsen des Fahrzeugs (10) mittels der Bremseinheit (12) auf.

11. Computerprogrammprodukt (14), umfassend Befehle, die bei der Ausführung des Computerprogrammprodukts (14) durch einen Computer diesen veranlassen, mittels einer Vorrichtung (13) nach Anspruch 10 das Verfahren nach einem der Ansprüche 1 bis 9 auszuführen.

12. Computerlesbares Speichermittel (15) mit einem darauf gespeicherten Computerprogrammprodukt (14) nach Anspruch 11.

## Claims

1. Method for braced movement of a vehicle (10) with a drive unit (11) for accelerating the vehicle (10) and with a brake unit (12) for braking the vehicle (10), comprising the steps of:
- generating a bracing drive torque by the drive unit (11),
- generating a braking torque by the brake unit (12) for compensating for the bracing drive torque and thereby for generating a bracing torque in the vehicle (10), and
- braking the vehicle (10) by reducing a drive torque, **characterized**
**in that**, for dissipation of the bracing torque, the braking moment is dissipated with a smaller torque dissipation gradient than the bracing drive torque.

2. Method according to Claim 1,
**characterized**
**in that** the vehicle (10) is accelerated by an acceleration drive torque and then the bracing torque is generated.

3. Method according to Claim 1,
**characterized**
**in that** the bracing torque is generated when the vehicle (10) is at a standstill and then an acceleration drive torque for accelerating the vehicle (10) is generated.

4. Method according to one of the preceding claims,
**characterized**
**in that** the braking torque is changed depending on a varyingly adjusted bracing drive torque and/or depending on a varyingly adjusted acceleration drive torque.

5. Method according to one of the preceding claims,
**characterized**
**in that** the bracing torque is dissipated when the vehicle (10) is at a standstill.

6. Method according to one of the preceding claims,
**characterized**
**in that** the vehicle (10) is accelerated by means of the acceleration drive torque to a speed of less than 10 km/h for a driving manoeuvre for positioning the vehicle (10) in a predefined holding position.

7. Method according to one of the preceding claims,
**characterized**
**in that**, in order to generate the bracing torque, the braking torque is generated with a greater torque generation gradient than the bracing drive torque.

8. Method according to one of the preceding claims,
**characterized**
**in that**, in order to generate the bracing torque, the generation of the braking torque is started temporally before the generation of the bracing drive torque.

9. Method according to one of the preceding claims,
**characterized**
**in that**, for dissipation of the bracing torque, dissipation of the braking torque is started temporally after dissipation of the bracing drive torque.

10. Device (13) for braced movement of a vehicle (10) according to a method according to one of the preceding claims, having a drive unit (11) for accelerating the vehicle (10), a brake unit (12) for braking the vehicle (10), and an adjustment unit for adjusting the bracing torque by means of the drive unit (11) and the brake unit (12) and for braking the vehicle (10) by means of the brake unit (12).

11. Computer program product (14), comprising commands which, for the execution of the computer program product (14) by a computer, cause the latter to carry out the method according to one of Claims 1 to 9 by means of a device (13) according to Claim 10.

12. Computer-readable storage medium (15) with a computer program product (14) according to Claim 11 stored thereon.

## Revendications

1. Procédé de déplacement de manière contrainte d'un véhicule (10) comprenant une unité d'entraînement (11) pour accélérer le véhicule (10) et une unité de freinage (12) pour freiner le véhicule (10), comprenant les étapes suivantes :
- génération d'un couple d'entraînement de contrainte par l'unité d'entraînement (11),
- générer un couple de freinage par l'unité de freinage (12) pour compenser le couple d'entraînement de contrainte et générer ainsi un couple de contrainte dans le véhicule (10), et
- freiner le véhicule (10) en réduisant un couple d'entraînement,
**caractérisé en ce que**,
pour une réduction du couple de contrainte, le couple de freinage est réduit avec un gradient de réduction de couple plus petit que le couple d'entraînement de contrainte.

2. Procédé selon la revendication 1,
**caractérisé en ce que**
le véhicule (10) est accéléré par un couple d'entraînement d'accélération, puis le couple de contrainte est généré.

3. Procédé selon la revendication 1,
**caractérisé en ce que**
le couple de contrainte est généré lorsque le véhicule (10) est à l'arrêt, puis un couple d'entraînement d'accélération est généré pour accélérer le véhicule (10) .

4. Procédé selon l'une des revendications précédentes **caractérisé en ce que**
le couple de freinage est modifié en fonction d'un couple d'entraînement de contrainte réglé de manière variable et/ou en fonction d'un couple d'entraînement d'accélération réglé de manière variable.

5. Procédé selon l'une des revendications précédentes **caractérisé en ce que**
le couple de contrainte est supprimé lorsque le véhicule (10) est à l'arrêt.

6. Procédé selon l'une des revendications précédentes **caractérisé en ce que**
le véhicule (10) est accéléré jusqu'à une vitesse inférieure à 10 km/h au moyen d'un couple d'entraînement d'accélération pour une manoeuvre de déplacement visant à positionner le véhicule (10) dans une position d'arrêt prédéfinie.

7. Procédé selon l'une des revendications précédentes **caractérisé en ce que**,
pour générer le couple de contrainte, le couple de freinage est généré avec un gradient de génération de couple supérieur à celui du couple d'entraînement de contrainte.

8. Procédé selon l'une des revendications précédentes, **caractérisé en ce que**,
pour générer le couple de contrainte, la génération du couple de freinage est lancée avant la génération du couple d'entraînement de contrainte.

9. Procédé selon l'une des revendications précédentes, **caractérisé en ce que**,
pour une réduction du couple de contrainte, une réduction du couple de freinage est démarrée temporellement après une réduction du couple d'entraînement de contrainte.

10. Dispositif (13) pour déplacer un véhicule (10) sous contrainte selon un procédé selon l'une des revendications précédentes, comprenant une unité d'entraînement (11) pour accélérer le véhicule (10), une unité de freinage (12) pour freiner le véhicule (10) et une unité de réglage pour régler le couple de contrainte au moyen de l'unité d'entraînement (11) et de l'unité de freinage (12), et pour freiner le véhicule (10) au moyen de l'unité de freinage (12).

11. Produit programme d'ordinateur (14) comprenant des instructions qui, lorsque le produit programme d'ordinateur (14) est exécuté par un ordinateur, amènent ce dernier à mettre en oeuvre, au moyen d'un dispositif (13) selon la revendication 10, le procédé selon l'une des revendications 1 à 9.

12. Moyen de stockage (15) lisible par ordinateur, sur lequel est stocké un produit programme d'ordinateur (14) selon la revendication 11.
